# FASCICULE DE BREVET EUROPEEN

(11) **EP 2 967 040 B1**
(45) Date de publication et mention de la délivrance du brevet: **21.10.2020**
(21) Numéro de dépôt: 14716876.9
(22) Date de dépôt: 13.03.2014
(51) Int. Cl.: A01N 33/04, A01P 1/00

(54) **COMPOSITION BIOCIDE ET PROCÉDÉ DE TRAITEMENT DE L'EAU OU DE SURFACES EN CONTACT D'EAU**
BIOZIDE ZUSAMMENSETZUNGEN UND VERFAHREN ZUR BEHANDLUNG VON WASSER ODER VON OBERFLÀCHEN, DIE IN KONTAKT MIT WASSER SIND
BIOCIDAL COMPOSITION AND METHOD FOR TREATING WATER OR SURFACES IN CONTACT WITH WATER

(30) Priorité: 14.03.2013 FR 1352262
(43) Date de publication de la demande: 20.01.2016
(73) Titulaire: Termanox B.V., 8501 XH Joure (NL)
(72) Inventeur: VANLAER, Antoine, F-75004 Paris (FR); GUEZENNEC, Jean, F-29280 Plouzane (FR); GHILLEBAERT, François, F-62380 Affringues (FR)
(74) Mandataire: 't Jong, Bastiaan Jacob
(86) Numéro de dépôt international: PCT/FR2014/050589
(87) Numéro de publication internationale: WO 2014/140498

(56) Documents cités:
- WO-A1-03/021111
- WO-A1-2012/001164
- WO-A1-2012/151555
- CA-A1- 2 590 507
- FR-A1- 2 914 822

## Description

### Domaine de l'invention

La présente invention se rapporte au domaine du traitement de l'eau et/ou des surfaces en contact avec celle-ci.

En particulier, l'invention propose une composition biocide comprenant un agent biocide associé à un exopolysaccharide non ionique ou anionique en vue d'empêcher le développement et/ou d'éliminer des micro- et macro organismes dans l'eau ou sur lesdites surfaces en contact avec l'eau.

L'invention propose également un procédé de traitement de l'eau et/ou d'une surface en contact avec celle-ci comprenant ladite composition biocide, ainsi que son utilisation en vue de traiter des installations industrielles dans lesquelles de l'eau circule ou est stockée.

### Etat de la technique

De nombreuses industries utilisent soit de l'eau douce (l'eau de rivière, de fleuves, de lacs, de réservoirs naturels ou de barrage, de forage dans le sol, de puisage), soit de l'eau salée (eau de mer ou eau saumâtre). Cette eau est, par exemple, utilisée dans des circuits d'eau incendie, des circuits d'eau de chaudière, dans des circuits d'eau de refroidissement, dans les ballasts des navires, ou encore dans des plateformes ou des éoliennes offshores. L'eau circule dans ces installations industrielles dans des conduits à ciel ouvert ou fermés. Lorsque la circulation s'effectue en circuit ouvert, l'eau est prélevée, par exemple dans une rivière et est rejetée ensuite en aval, tandis que lorsque l'eau circule en circuit fermé et/ou semi-fermé, l'eau est généralement réutilisée plusieurs fois.

Cependant, il est courant que se développent rapidement sur les surfaces de ces installations dans lesquelles l'eau circule ou est stockée (milieux aqueux ou humide) des microorganismes qui forment sur ces surfaces un voile biologique ou bactérien.

Ce voile biologique, également appelé biofilm, est constitué d'une communauté de microorganismes, notamment du type bactéries, algues, protozoaires et champignons adhérant entre eux et à une surface. La production de biofilm est en effet caractérisée par la sécrétion d'une matrice qui est susceptible d'adhérer à de nombreux types de surfaces, notamment minéraux, métaux, verres, résines synthétiques.

Le phénomène d'adhésion d'un biofilm indésirable se déroule en plusieurs séquences :
1. Il y a tout d'abord formation d'un film primaire qui va conditionner la surface. Ce film primaire est formé de matières organiques présentes dans le milieu.
2. Puis, des micro-organismes vont se fixer par adhésion réversible au film primaire (liaisons chimiques non-covalentes ou faibles).
3. L'adhésion des micro-organismes sera ensuite permanente car facilitée par la production d'exopolymères saccharidiques ou de protéines ou glycoprotéines qui constituent des points d'ancrage pour une colonisation ultérieure de microorganismes de plus grande ampleur. Le film de micro-organismes fixés de façon permanente sur une surface constitue le biofilm au sens de la présente invention.
4. Enfin, la colonisation d'une surface par un biofilm peut entraîner, à terme, l'attachement de macroorganismes appartenant au règne animal pouvant former de grandes colonies. Ces macroorganismes peuvent être des mollusques tels que des moules et des huîtres ; des serpulidés ; des crustacés tels que les balanes ; des hydraires et des bryozoaires.

Or, les colonisations biologiques de micro- ou macro-organismes, nommées ci-après biosalissures, peuvent entraîner de nombreuses conséquences tant dans le domaine industriel, que dans le domaine environnemental.

Par exemple, la présence du biofilm dans les installations industrielles peut provoquer des corrosions localisées qui sont liées à la présence physique et au métabolisme des microorganismes constituant ce biofilm, tandis que les macroorganismes vont former des incrustations (dépôts) sur les surfaces des installations en contact avec l'eau. Or, ces incrustations sont difficiles à éliminer et il est souvent nécessaire d'arrêter l'installation, de la vider de son eau, puis d'enlever mécaniquement ou manuellement lesdites incrustations. De plus, la présence de ces biosalissures entraîne généralement une diminution des débits d'eau (résistance à l'avancement des fluides) et des pertes importantes de rendement des installations industrielles, comme par exemple dans les échangeurs thermiques. Enfin, le déplacement des organismes vivants dans des installations contenant de l'eau, et notamment dans les ballasts des navires, peut être à l'origine de la dissémination d'espèces invasives, comme les moules zébrées ou d'espèces pathogènes comme le virus du choléra.

Afin d'empêcher et/ou de détruire ces biosalissures, plusieurs solutions ont été proposées dans l'état de la technique.

De nombreux composés dits « biocides » ont tout d'abord été utilisés pour le traitement de l'eau.

Ces biocides comprennent le plus souvent des halogènes ou des dérivés organiques ou minéraux halogénés, tels que le chlore, le brome, l'iode, le chlorure de potassium, l'acide hypochloreux et ses sels de sodium ou de calcium, l'acide hypobromeux, les sels des acides dichloro- et trichloroisocyanuriques ou les hydantoïnes halogénés. Cependant, ces composés présentent l'inconvénient d'être corrosifs et de former avec les matières organiques contenues dans l'eau des composés organo-halogénés potentiellement toxiques.

D'autres composés ont également été proposés, comme des dérivés peroxygénés et dérivés phénoliques, de métaux lourds ou de leurs dérivés organiques, de formol, d'acide benzoïque et de benzoates pour des traitements par injection ou par contact avec un revêtement. Toutefois nombre d'entre eux laissent des résidus toxiques, corrosifs ou difficilement biodégradables dans l'eau traitée.

Il est également connu de l'état de la technique que des composés biocides peuvent être utilisés sous forme de solution ou de dispersion dans une phase aqueuse contenant éventuellement des solvants organiques. Dans ce cas, ils sont le plus souvent injectés dans l'eau à traiter. Cependant, dans certains cas, en particulier lorsque la surface à protéger est très petite comparativement à la masse d'eau, ils sont incorporés dans un matériau. Ce matériau peut, par exemple, correspondre à une peinture qui est appliquée sur la surface à protéger, telle qu'une coque de bateau, de façon à traiter la surface en contact avec l'eau.

A cet effet, le document FR-A-1 601 304 décrit un revêtement algicide comprenant des monoamines et des polyamines grasses destiné à être déposé sur les surfaces en contact avec l'eau que l'on désire protéger. Il est également connu par EP-A-0 017 611 que les amines grasses sont susceptibles de détruire les microorganismes et, par conséquent, le voile biologique. Le document EP 0 716 045 décrit également l'utilisation de plusieurs amines grasses pour lutter contre le développement de macro-salissures biologiques dans l'eau ou sur les surfaces en contact avec cette dernière. Le document FR 2 914 822 décrit l'utilisation d'une composition phytosanitaire comprenant une triamine pour neutraliser des nématodes, des bactéries ou encore des champignons.

Par ailleurs, le document WO2012/001164 décrit l'utilisation d'exopolysaccharide afin de prévenir l'adhésion de microorganismes sur une surface.

Il est également connu de l'état de la technique que des agents biocides peuvent être employés en combinaison avec des polymères inertes ou texturants pour des applications diverses.

Le document US 5,108,504 décrit par exemple des compositions d'encres pour imprimantes à jet d'encre, dans lesquelles des polysaccharides sont utilisés en tant que texturant et stabilisant à des concentrations, comprises entre 0,05 et 0,75 % en poids, en présence éventuellement de 0,1 à 0,4 % en poids d'un agent biocide comme le glutaraldéhyde, agissant en tant que conservateur.

Le document US 4,908,209 décrit une composition biocide qui comprend un ester de phosphate en tant qu'agent biocide et un véhicule inerte sous forme d'un polymère naturel (gélatine) ou synthétique. Le véhicule inerte permet de relâcher l'agent biocide progressivement dans le temps.

De même, WO 2010/148158 présente une formulation (dispersion) comprenant un biocide microencapsulé dans un support inerte (silicates, aluminosilicates, bentonite, terre de diatomées). La formulation est stabilisée par un agent épaississant permettant d'améliorer la viscosité de la dispersion sans modifier les propriétés originales du biocide. L'agent épaississant peut être par exemple de la gomme de xanthane.

Le document US 2010/029530 décrit une solution détergente destinée à décontaminer les instruments chirurgicaux ou autre matériel comprenant la combinaison d'alkyl-polysaccharide en C₈-C₁₈ d'un tensio-actif non ionique et d'un biocide tensio-actif contenant de l'azote (tel que 2-bromo-2nitro-1,3propanol ou le 2-méthyl-4-isothiazolin-3one).

Le document CA 2 590 507 décrit une composition antimicrobienne pour substrat de nettoyage. La composition comprend en particulier en p/p : 3 à 50% d'un agent antimicrobien comme un composé quaternaire, 4 à 50% d'un tensio-actif et 0,5 à 20% d'un parfum.

Le document WO03/021111 décrit un procédé de traitement d'eau d'écoulement et des surfaces en contact avec ladite eau en écoulement caractérisé en ce qu'on introduit dans l'ensemble de ladite eau au moins un composé macromoléculaire de haut poids moléculaire ayant des propriétés de réducteur de frottement hydrodynamique, et au moins un composé monoamine ou polyamine comprenant une chaîne alkyle ou alkényle présentant des propriétés biocides. Le produit se présente sous la forme d'une émulsion.

Le document WO2012/151555 décrit l'utilisation d'une polyamine pour inhiber la formation d'u biofilm.

Il existe donc un besoin réel de développer des approches alternatives aux traitements traditionnels afin d'empêcher le développement et/ou d'éliminer des micro- et macro organismes dans l'eau ou sur lesdites surfaces en contact avec l'eau.

En particulier, il existe un besoin constant de trouver de nouvelles compositions biocides qui soit utilisable de façon appropriée dans une installation industrielle où l'eau circule en circuit ouvert ou fermé et qui présentent en particulier les propriétés suivantes :
- ne pas induire ou idéalement empêcher la corrosion des surfaces en contact avec l'eau, que cette corrosion provienne des biosalissures ou de produits chimiques contenus dans l'eau, tels que l'O₂ ou les chlorures,
- empêcher la formation du voile biologique et le développement de colonies de macroorganismes,
- ne laisser aucun résidu toxique ou corrosif dans l'eau après utilisation à une concentration pouvant nuire à la flore et la faune en aval de l'installation industrielle et ainsi protéger l'environnement.

### Description détaillée de l'invention

La présente invention a ainsi pour but de proposer une composition biocide qui évite tout ou partie des inconvénients précités.

A cet effet, la présente invention a pour objet une composition biocide comprenant au moins un composé actif biocide et au moins un exopolysaccharide (EPS) non ionique ou anionique, le composé actif biocide étant choisi parmi au moins une triamine répondant à la formule II ci-dessous, caractérisé en ce que la composition biocide comprend, en poids, par rapport au poids total de ladite composition biocide: de 0,5 à 25% du composé biocide et de 0,1 à 10% de l'exopolysaccharide.

Les inventeurs ont pu mettre au point une composition biocide comprenant un composé biocide spécifique associée à un polysaccharide qui est en particulier un exopolysaccharide (EPS). Les exopolysaccharides n'ont aucun effet antimicrobien et ne présentent pas non plus d'activité biocide. Or, de manière surprenante et inattendue, les inventeurs ont découverts que les exopolysaccharides permettaient d'accroître l'activité biocide de la composition biocide selon l'invention. En effet, de manière inattendue, l'ajout à la composition biocide comprenant la triamine de formule II d'au moins un exopolysaccharide permettait d'augmenter l'activité biocide de la composition avec un effet de synergie.

Sans vouloir être lié par une quelconque théorie, la Demanderesse suggère que la composition biocide de l'invention interférerait avec les matières organiques du film primaire ou avec les membranes des organismes vivants (unicellulaires ou pluricellulaires). En particulier, il semblerait que les substances amphiphiles comme la triamine composées de longues chaines hydrophobes et d'un pôle hydrophile perturberaient les membranes biologiques de ces organismes vivants, ce qui induirait une modification des transferts ioniques et gazeux transmembranaires. Ce mécanismes serait dû au fait que les chaînes amphiphiles présenteraient une structure proche des phospholipides constituants cette membrane biologique.

Dans le cadre de la présente invention, on entend par "film primaire", un film conditionnant composé de protéines ou de fragments protéiques, de glucides, de lipides, de matières minérales comme par exemple des sels minéraux, issus du milieu environnant. Ce film primaire stimule l'adhésion bactérienne.

Par "biofilm", on entend un film de microorganismes, généralement des bactéries, qui viennent s'accrocher au film primaire, dans une première étape d'adhésion réversible puis irréversible. Dans le sens de la présente invention, un biofilm est constitué de micro-organismes. Ainsi, les macroorganismes fixés à une surface ne forment pas un biofilm au sens de la présente invention.

Egalement, à moins qu'il n'en soit spécifié autrement, l'indication d'un intervalle de valeurs de « X à Y », ou entre « X et Y » dans la présente invention, s'entend comme incluant les valeurs X et Y.

La composition biocide selon l'invention est, de préférence une composition aqueuse, définie comme un produit «contenant des substances actives ou contenant des préparations destinées à détruire, repousser ou rendre inoffensif des organismes nuisibles (comme des microorganismes ou des macro-organismes), à en prévenir l'action ou à les combattre de toute autre manière par une action chimique ou biologique » (art. 2 de la directive 89/8/CE).

Le composé biocide convenant pour la composition biocide de la présente invention répond à la formule II ci-dessous : 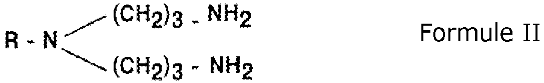 dans laquelle R est chaîne alkyle linéaire ou ramifiée en C₁-C₁₈, de préférence en C₄-C₁₆, et de manière encore plus préférée en C₈-C₁₄.

Les composés de formule II convenant en tant que composé biocide de l'invention sont choisis avantageusement parmi : N,N-Bis(3-aminopropyl)octylamine, et N,N-Bis(3-aminopropyl)dodécylamine, ou un de leurs mélanges.

En particulier, le N,N-Bis(3-aminopropyl)dodécylamine est préféré (N° EINECS : 219-145-8 et N° CAS : 2372-82-9). Ce composé est par exemple commercialisé par la société Akzo-Nobel sous les marques Triameen® Y12D et Triameen® Y12D-30, ou par la société Lonza sous la marque Lonzabac® 12.30.

Selon l'invention, le composé biocide de formule II représente en poids de 0,5 à 25% de préférence de 5% à 25% et de manière encore plus préférée de 9% à 25% et plus précisément de 12 à 17% par rapport au poids total de la composition biocide.

La composition biocide peut également contenir un autre composés biocide qui est différent de la triamine de formule II et qui est de préférence hydrosoluble.

Cet autre composé biocide peut correspondre par exemple à :
- des produits biocides destinés à l'hygiène humaine comme : le chlorure de benzéthonium ; bromure de tétradonium ; chloroxylénol ; nitrate d'argent ; dichlorure de N,N'-(décane-1,10-diyldi-1(4H)-pyridyl-4-ylidène)bis(octylammonium) ;
- des désinfectants utilisés dans le domaine privé et dans le domaine de la santé publique et autres biocides comme le benzoate de benzyle ; diméthyldithiocarbamate de potassium ; thirame ; zirame ; thiabendazole ; acide salicylique ; argent ; cuivre ; composés de l'ion ammonium quaternaire, benzylalkyl en C1₂-₁₈ diméthyles, sels avec le dioxyde-1,1 de benzisothiazol-1,2 one-3(2H) (1:1) ;

- des désinfectants pour les surfaces en contact avec les denrées alimentaires et les aliments pour animaux comme le N-(3-aminopropyl)-N-dodécylpropane-1,3-diamine ; chlorure de didécyldiméthylammonium ; chlorure d'argent ; composés de l'ion ammonium quaternaire, benzylalkyle en C₁₂-₁₈ diméthyles, chlorures ; dichlorophène ; composés de l'ion ammonium quaternaire, alkyle en C₁₂-₁₄ [(éthylphényl)méthyl]diméthyles, chlorures ;
- des produits de protection des liquides utilisés dans les systèmes de refroidissement et de fabrication comme le N-(3-aminopropyl)-N-dodécylpropane-1,3-diamine ; oxyde de diargent ; polyhexaméthylène biguanide ; 2-chloroacétamide ; 4,5-dichloro-2-octyl-2H-isothiazole-3-one ; dodécylguanidine, monochlorhydrate ; chlorotoluron ; prometryne ; benzothiazole-2-thiol ; composés d'ammonium quaternaire (dialkyldiméthyl (alkyles de C₆-C₁₈ saturés et insaturés, et alkyl de soufre, alkyl de coco et alkyl de soja) chlorures, bromures ou sulfates de méthyle/DDAC ; composés d'ammonium quaternaire (benzylakyldiméthyl (alkyles de C₈-C₂₂, saturés et insaturés, et alkyl de suif, alkyl de coco et alkyl de soja) chlorures, bromures ou hydroxydes/BKC ; composés de l'ion ammonium quaternaire, dialkyle en C₈-₁₀ diméthyles, chlorures ; composés de l'ion ammonium quaternaire, benzylalkyl en C₁₂-₁₄ diméthyles, chlorures ;
- des produits antimoisissures comme le lignosulfonate de sodium ; polymère de N-Méthylméthanamine (Einecs 204-697-4 avec(chloromethyl)oxirane (Einecs 203-439-8)/chlorure d'ammonium quaternaire polymérisé ; borate de N-didécyl-N-dipolyéthoxyammonium/borate de didécylpolyoxéthylammonium ; 1,2-benzisothiazole-3(2H)-one ; Bis-(3-aminopropyl)-octylamine ; 2,2',2"-(hexahydro-1,3,5-triazine-1,3,5-triyl)triéthanol ; bomposés de l'ion ammonium quaternaire, [[[[(carboxy-2 éthyl)(hydroxy-2 éthyl)amino]-2 éthyl]amino]-2 oxo-2 éthyl]alkyl de coco diméthyles, hydroxydes, sels internes ;
- des produits de protection des fluides utilisés dans la transformation des métaux comme la lignine ; composés de l'ion ammonium quaternaire, benzylalkyle en C12-18 diméthyles, chlorures ; bronopol ; composés de l'ion ammonium quaternaire, benzylalkyl en C12-16 diméthyles, chlorures ;
- des produits anti-salissures : pyrithione zincique ; dichloro-N-[(diméthylamino)sulfonyl]fluoro-N-(p-tolyl)méthanesulfenamide /tolylfluanide ; dichlofluanide ; thiocyanate de cuivre; oxyde de dicuivre ; bis(1-hydroxy-1H-pyridine-2-thionato-O,S)cuivre ; zinebe ; N'-tert-butyl-N-cyclopropyl-6-(méthylthio)-1,3,5-triazine-2,4-diamine ;
- ou d'autres composés synthétiques comme N-Coco-1,3-diaminopropane ou naturels comme l'acide zostérique.
- ou un de leurs mélanges.

Parmi l'autre composé biocide différent de la triamine de formule I, l'acide zostérique est préféré.

Selon l'invention, l'autre composé biocide différent de la triamine de formule I représente en poids de 0 à 30%, de préférence de 0,1% à 10% et de manière encore plus préférée de 0,5% à 8% et plus précisément de 1 à 3% par rapport au poids total de la composition biocide.

Dans le cadre de la présente invention, par polysaccharide non ionique ou anionique, on entend une macromolécule glucidique formée par enchaînement d'un grand nombre de sucres élémentaires.

Les exopolysaccharides non ionique ou anionique selon l'invention sont des polymères de haut poids moléculaire qui sont composés de sucres ou oses et sont issus de la fermentation bactérienne, c'est-à-dire qu'ils sont sécrétés par des microorganismes qui les relarguent dans le milieu de culture. Ils peuvent être, selon un mode de réalisation, natifs, à savoir chimiquement non modifiés, ou selon un seconde mode de réalisation, les EPS peuvent être modifiés par dépolymérisation et/ou intégration de fonction set groupes chimiques.

De préférence, les EPS utilisés dans le cadre de l'invention ont une masse moléculaire supérieure à 500 kDa, de préférence supérieure à 800 kDa, plus préférentiellement supérieure à 1000 kDa, encore plus préférentiellement supérieure à 2000 kDa.

Selon un mode de réalisation de l'invention, les EPS utilisés dans la présente invention comprennent des oses neutres, des oses acides, des oses aminés, des sulfates et/ou des protéines. Des exemples d'oses neutres incluent, mais ne sont pas limités à, glucose, rhamnose, mannose, galactose. Des exemples d'oses acides incluent, mais ne sont pas limités à, acides uroniques et notamment acide glucuronique, acide galacturonique, acide hexuronique, tel que l'acide hexuronique de structure furanique substitué sur son carbone en position 3 par un résidu lactyle. Des exemples d'oses aminés incluent, mais ne sont pas limités à, N acétyl glucosamine et N actéyl galactosamine.

En particulier, les EPS convenant pour l'invention peuvent comprendre plus de 30 %, de préférence de 30 à 95% d'oses neutres, en particulier de 40 à 90%, encore plus préférentiellement de 45 à 88% d'oses neutres, en nombre d'oses par rapport au nombre total d'oses dans l'EPS.

Avantageusement, les EPS de l'invention comprennent de 1 à 70% d'oses acides, de préférence de 5 à 60%, encore plus préférentiellement de 8 à 53% d'oses acides, en nombre d'osés par rapport au nombre total d'oses dans l'EPS.

De manière préférentielle, les EPS convenant pour l'invention comprennent moins de 30% d'oses aminés, de préférence moins de 20%, encore plus préférentiellement moins de 12% d'oses aminés, en nombre d'oses par rapport au nombre total d'oses dans l'EPS.

Les exopolysaccharides peuvent également contenir des substituants non glucidiques, comme l'acétate, le pyruvate, le succinate et le phosphate.

Selon une autre caractéristique, les EPS de l'invention comprennent moins de 50 molécules de sulfates pour 100 oses, de préférence moins de 40 molécules de sulfate, encore plus préférentiellement moins de 35 molécules de sulfate pour 100 oses dans l'EPS.

De préférence, les EPS comprennent moins de 50 protéines pour 100 oses, de préférence moins de 40 protéines, encore plus préférentiellement moins de 37 protéines pour 100 oses dans l'EPS.

De préférence, les EPS ne comprennent pas d'aminoarabinose, d'aminoribose, d'heptose et/ou de xylose.

Avantageusement, les bactéries produisant les exopolysaccharides convenant pour la présente invention sont isolées de prélèvements naturels ou obtenus à partir de collections existantes.

Les EPS de l'invention sont ceux synthétisés dans des conditions contrôlées (déséquilibre nutritionnel généré par un rapport Carbone/Azote élevé dû à un milieu nutritionnel enrichi en carbohydrates) lors de la fermentation de bactéries issues d'écosystèmes atypiques (continent antarctique, tapis microbiens, récifs coraliens,...).

Suivant un premier mode de réalisation, les EPS sont choisis parmi : dextrane (*Leuconostoc mesenteroides, Leuconostoc dextranicum* and *Lactobacillus hilgardii*), xanthane (*Xanthomonas campestris*), succinoglycane (*Alcaligenes faecalis* var *myxogenes, Sinorhizobium meliloti*), galactomannane (*Achromobacter* spp., *Agrobacterium radiobacter, Pseudomonas marginalis, Rhizobium* spp. and *Zooglea' spp.)* ou un de leurs mélanges.

Suivant un second mode de réalisation, ces EPS sont choisis parmi :MO 203, MO 245, MO 169, MO 229, FAK 1657, RA 19, RA 29, CAM 023, CAM 025, CMA 036, CAM 064, CAM 015, CAM 090, COT A, MICB-03A, EPS GG, MI 550, TIK 650, et TE 7 ou un de leurs mélanges.

Suivant ce second mode de réalisation, ces EPS peuvent être synthétisées par des bactéries du genre *Alteromonas, Pseudoalteromonas, Vibrio, Pseudomonas ou Pyrococcus* conformément à la taxonomie en vigueur au jour de la présente invention. Si la taxonomie devait être modifiée, l'homme du métier pourrait adapter les modifications de taxonomie pour en déduire les EPS de l'invention.

Les compositions relatives de ces EPS selon le second mode de réalisation sont indiquées dans le tableau suivant :

| Référence EPS | Oses neutres¹ | Oses acides¹ | Oses amines¹ | Sulfates² | Protéines² |
|---|---|---|---|---|---|
| MO 203 | 46 | 20 | 0 | 0 | 4 |
| MO 245 | 10 | 30 | 30 | 0 | 3 |
| MO 169 | 52 | 28 | 0 | 8 | 5 |
| MO 229 | 60 | 18 | 0 | 7 | 6 |
| FAK 1657 | 55 | 10 | 0 | 0 | 1 |
| RA 19 | 48 | 8 | 0 | 29 | 3 |
| RA 29 | 44 | 8 | 0 | 21 | 8 |
| CAM 090 | 38 | 38 | 2 | 2 | 5 |
| CAM 025 | 68 | 12 | 0 | 5 | 2 |
| CAM 023 | 64 | 13 | 0 | 0 | 5 |
| CAM 015 | 40 | 25 | 0 | 0 | 10 |
| CAM 036 | 42 | 14 | 10 | 0 | 8 |
| CAM 064 | 46 | 17 | 5 | 4 | 4 |
| COTA | 40 | 8 | 8 | 6 | 10 |
| MICB-03A | 45 | 7 | 8 | 0 | 15 |
| EPS GG | 90 | 5 | 0 | 0 | 2 |
| MI 550 | 44 | 18 | 0 | 8 | 5 |
| TI K 650 | 47 | 10 | 0 | 0 | 8 |
| TE 7 | 38 | 14 | 2 | 8 | 8 |

| | | | | | |
|---|---|---|---|---|---|
| ¹: les quantités relatives sont indiquées en % d'oses par rapport au nombre total d'oses dans l'EPS ²: les quantités relatives sont indiquées en nombre de molécules pour 100 oses dans l'EPS. | | | | | |

Ces EPS sont connus de l'art antérieur et décrits notamment dans les publications suivantes :
- (RA19): Raguénès G, Moppert X, Richert L, Ratiskol J, Payri C, Costa B. A novel exopolymer-producing bacterium, Paracoccus zeaxanthinifaciens subsp. payriae, isolated from a "kopara" mat located in Rangiroa, an atoll of French Polynesia. Curr Microbiol Volume 49:145-51 (2004).
- (CAM 025, CAM 036, CAM 015, CAM 064, CAM 090, CAM 023) : C.A. Mancuso Nichols, J. Guezennec, J.P. Bowman Bacterial Exopolysaccharides from Extreme Marine Environments with Spécial Consideration of the Southern Ocean, Sea Ice, and Deep-Sea Hydrothermal Vents: A Review . Marine Biotechnology Volume 7, 253-271 (2005).
- (MO 203, MO 245, RA 19, RA 29, MI 550, TIK 650, TE7): Jean Guézennec, Xavier Moppert, Gérard Raguénès, Laurent Richert, Bernard Costa, Christelle Simon-Colin: Microbial mats in French Polynesia and their biotechnological applications. Process Biochemistry, Volume 46 16-22 (2011).

Les EPS préférés convenant pour la présente invention sont choisis parmi : MO 203, MO 169, FAK 1657, le xanthane et le dextrane ou un de leurs mélanges.

De préférence, l'EPS de l'invention peut être fonctionnalisée et porter des charges cationiques et/ou anioniques.

Selon l'invention, l'exopolysaccharide représente en poids de 0,1 à 10%, de préférence de 0,5% à 8% et de manière encore plus préférée de 0,5% à 5% et plus précisément de 1 à 4% par rapport au poids total de la composition biocide.

La composition biocide selon l'invention est préparée par mélange des différents constituants, à savoir en mélangeant au moins de l'eau, le composé biocide et le polysaccharide de l'invention.

La présente invention a également pour objet un procédé de traitement d'eau et de surfaces en contact avec ladite eau en vue d'empêcher le développement et/ou d'éliminer un voile biologique, des micro- et macro organismes dans l'eau ou sur lesdites surfaces en contact avec l'eau, caractérisé en ce que le procédé comporte le ou les étapes suivantes : on injecte dans l'eau et/ou on applique sur lesdites surfaces la composition biocide telle que décrite ci-dessus.

Ainsi, selon un premier mode de mise en oeuvre, la composition biocide selon l'invention est avantageusement injectée dans l'eau. Selon ce premier mode de réalisation, la composition biocide est injectée dans l'eau de façon intermittente ou continue. Dans le premier cas (traitement par intermittence), une dose nécessaire pour obtenir une concentration entre 0,01 et 20 ppm de la composition biocide par litre d'eau peut être convenable au niveau des surfaces traitées. Dans le second cas (traitement en continue), des injections quotidiennes de la composition biocide de façon à obtenir une concentration de l'ordre de 6 mg/l peut s'avérer suffisantes. Les concentrations nécessaires de la composition biocide dépendent des micro et macro-organismes à éliminer, de la dimension et de la nature des surfaces en contact avec l'eau et du débit d'eau et peuvent facilement être déterminées par l'homme de métier. Selon une variante de ce mode de réalisation, les produits actifs de la composition biocide (PS ou EPS et produit biocide) peuvent être injectés séparément dans l'eau.

Selon un second mode de mise en oeuvre, la composition biocide est incorporée dans un matériau, par exemple une peinture, de sorte à pouvoir être applicable sur une surface à protéger. Selon ce mode de réalisation, on mélange la composition biocide telle que décrites ci-dessus avec par exemple une charge pulvérulente, comme de la silice micronisée, de façon à obtenir un produit pulvérulent que l'on introduit ensuite dans une peinture de la même façon qu'un pigment. L'invention a donc aussi pour objet une peinture utilisée pour la mise en oeuvre de cette variante du procédé qui comporte la composition biocide selon l'invention.

Le procédé selon l'invention utilisant la composition biocide permet ainsi d'éviter le développement du voile biologique due aux microorganismes ou des macro-organismes ou de les détruire lorsqu'ils sont formés et d'éviter la corrosion due au voile biologique.

Selon la présente invention, les inventeurs ont découverts que les triamines de formule I associés à un polysaccharide comme un exopolysaccharide, avaient non seulement une activité sur le voile biologique et sur les microorganismes constituant ce voile, mais également sur les macroorganismes appartenant au règne animal se fixant sur les surfaces en contact avec l'eau, qu'il y ait ou non possibilité de photosynthèse. Ces macroorganismes peuvent être des serpulides, des crustacés (balanes), des hydraires, des bryozoaires et plus spécialement des mollusques par exemple les moules et les huîtres.

Pour simplifier, cette activité contre les macroorganismes sera dans la suite de la demande désignée par les termes "activité molluscicide". Il a ainsi été trouvé que cette activité "molluscicide" est particulièrement élevée lorsqu'un composé biocide de formule I et en particulier un composé biocide de formule II ou III est mélangé avec un polysaccharide comme le dextrane. En effet, il y a une réaction synergique entre ces deux types de composés (composés biocides spécifiques de l'invention et un polysaccharide) dans la mesure en outre où les polysaccharides ne présentent pas d'activité antimicrobienne ou biocide.

La composition biocide utilisée selon l'invention permet également d'éviter de façon connue la formation du voile biologique due aux microorganismes ou de le détruire lorsqu'il est formé et d'éviter la corrosion due à ce voile biologique.

La présente invention a ainsi également pour objet l'utilisation d'une composition biocide telle que décrite ci-dessus, pour empêcher le développement et/ou éliminer un voile biologique, des micro- et/ou macro organismes dans l'eau ou sur lesdites surfaces en contact avec l'eau.

En particulier, la composition biocide est destinée à être utilisée dans des circuits d'eau incendie, des circuits d'eau de chaudière, dans des circuits d'eau de refroidissement, dans les ballasts des navires, ou encore dans des plateformes ou des éoliennes offshores.

### Exemples

Des exemples de formulation de compositions biocides selon l'invention sont donnés ci-après à titre illustratif et non limitatif, et permettront de mieux comprendre l'invention. Les concentrations des constituants sont données en poids par rapport au poids total des compositions biocides exemplifiées.

### Exemple 1

| Substances chimiques | Concentration % (masse/masse totale composition) |
|---|---|
| N,N-Bis(3-aminopropyl) dodécylamine | 15,0 |
| Dextrane | 3,0- 5,0 |
| Eau | 80,0 - 82,0 |

### Exemple 2

| Substances chimiques | Concentration % (masse/masse totale composition) |
|---|---|
| N,N-Bis(3-aminopropyl) dodécylamine | 15,0 |
| Dextrane | 1,0 |
| Acide zostérique | 1,0 - 3,0 |
| Eau | 80,0 - 83,0 |

### Exemple 3

| Substances chimiques | Concentration % (masse/masse totale composition) |
|---|---|
| N,N-Bis(3-aminopropyl) dodécylamine | 15,0 |
| MO 203 | 2,0 |
| Eau | 83,0 |

### Exemple 4

| Substances chimiques | Concentration % (masse/masse totale composition) |
|---|---|
| N,N-Bis(3-aminopropyl) dodécylamine | 15,0 |
| MO 169 | 2,0 |
| Eau | 83,0 |

### Exemple 5

| Substances chimiques | Concentration % (masse/masse totale composition) |
|---|---|
| N,N-Bis(3-aminopropyl)dodécylamine | 15,0 |
| FAK 1657 | 1,5 |
| Eau | 84,5 |

Ces différentes compositions ont été testées et il a été constaté
- qu'elles n'induisaient pas, voire empêchaient la corrosion sur des surfaces telles que l'acier, le cuivre, la céramique, le verre et la matière plastique,
- qu'elles empêchaient également la formation du voile biologique et le développement de colonies de macroorganismes, et
- qu'elles ne laissaient aucun résidu toxique ou corrosif dans l'eau après utilisation à une concentration pouvant nuire à la flore et la faune en aval de l'installation industrielle testée et protégeaient ainsi l'environnement.

## Revendications

1. Composition biocide comprenant au moins un composé actif biocide et au moins un exopolysaccharide (EPS) non ionique ou anionique,
le composé actif biocide étant choisi parmi au moins une triamine répondant a la formule II ci-dessous, 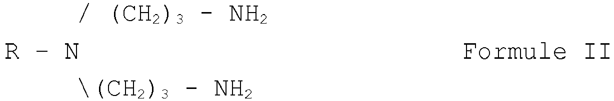 dans laquelle R est chaîne alkyle linéaire ou ramifiée en C₁-C₁₈,
**caractérisée en ce que** la composition biocide comprend, en poids, par rapport au poids total de ladite composition biocide: de 0,5 à 25% du composé biocide et de 0,1 à 10% de l'exopolysaccharide.

2. Composition biocide selon la revendication 1, dans laquelle le composé biocide de formule II est choisi parmi : N,N-Bis(3-aminopropyl)octylamine et N,N-Bis(3-aminopropyl)dodécylamine, ou un de leurs mélanges.

3. Composition biocide selon la revendication 3, dans laquelle le composé biocide de formule II est N,N-Bis(3-aminopropyl)dodécylamine.

4. Composition biocide selon l'une des revendications précédentes, dans laquelle le composé biocide de formule II représente en poids de 9% à 25% par rapport au poids total de la composition biocide et l'exopolysaccharide représente en poids de 0,5% à 8% et de manière encore plus préférée de 0,5% à 5% par rapport au poids total de la composition biocide.

5. Procédé non thérapeutique de traitement d'eau et de surfaces en contact avec ladite eau en vue d'empêcher le développement et/ou d'éliminer des micro- et macro organismes dans l'eau ou sur lesdites surfaces en contact avec l'eau, **caractérisé en ce qu'**on injecte dans l'eau et/ou on applique sur lesdites surfaces la composition biocide selon l'unedes revendications 1 à 4.

6. Procédé selon la revendication 5, **caractérisé par le fait que** l'on injecte la composition biocide dans l'eau de façon intermittente.

7. Procédé selon la revendication 6, **caractérisé par le fait que** l'on injecte la composition biocide dans l'eau, de façon continue.

8. Procédé selon la revendication 6, **caractérisé par le fait qu'**on mélange au moins la composition biocide avec une charge pulvérulente, on prépare une peinture en utilisant le mélange ainsi obtenu comme un pigment et on applique ladite peinture sur les surfaces en contact avec l'eau.

9. Utilisation non thérapeutique d'une composition biocide selon l'une des revendications 1 à 4, afin d'empêcher le développement dans l'eau ou sur une surface en contact avec l'eau: un voile biologique, des micro- et/ou macro organismes.

## Patentansprüche

1. Biozide Zusammensetzung, umfassend mindestens einen bioziden Wirkstoff und mindestens ein nicht ionisches oder anionisches Exopolysaccharid (EPS),
wobei der biozide Wirkstoff aus mindestens einem Triamin ausgewählt ist, das der folgenden Formel II entspricht, 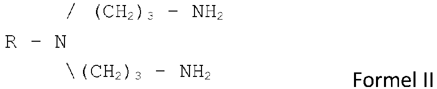 wobei R eine lineare oder verzweigte C₁-C₁₈ Alkylkette ist,
**dadurch gekennzeichnet, dass** biozide Zusammensetzung in Gewicht, in Bezug auf das Gesamtgewicht der bioziden Zusammensetzung umfasst: von 0,5 bis 25% des bioziden Wirkstoffs und von 0,1 bis 10% des Exopolysaccharids.

2. Biozide Zusammensetzung nach Anspruch 1,
wobei der biozide Wirkstoff der Formel II ausgewählt ist aus: N,N-Bis(3-Aminopropyl)octylamin und N,N-Bis(3-Aminopropyl)dodecylamin, oder einem ihrer Gemische.

3. Biozide Zusammensetzung nach Anspruch 3,
wobei der biozide Wirkstoff der Formel II N,N-Bis(3-Aminopropyl)dodecylamin ist.

4. Biozide Zusammensetzung nach einem der vorstehenden Ansprüche, wobei der biozide Wirkstoff der Formel II in Gewicht von 9% bis 25% in Bezug auf das Gesamtgewicht der bioziden Zusammensetzung repräsentiert, und das Exopolysaccharid in Gewicht 0,5% bis 8% und auf noch bevorzugtere Weise von 0,5% bis 5% in Bezug auf das Gesamtgewicht der bioziden Zusammensetzung repräsentiert.

5. Nicht therapeutisches Verfahren zur Behandlung von Wasser und von Oberflächen in Kontakt mit dem Wasser zwecks Verhinderung der Entwicklung und/ oder Beseitigung der Mikro- und Makroorganismen im Wasser oder auf den Oberflächen in Kontakt mit dem Wasser, **dadurch gekennzeichnet, dass** die biozide Zusammensetzung nach einem der Ansprüche 1 bis 4 in das Wasser injiziert und/ oder auf die Oberflächen aufgebracht wird.

6. Verfahren nach Anspruch 5, **dadurch gekennzeichnet, dass** die biozide Zusammensetzung intermittierend in das Wasser injiziert wird.

7. Verfahren nach Anspruch 6, **dadurch gekennzeichnet, dass** die biozide Zusammensetzung kontinuierlich in das Wasser injiziert wird.

8. Verfahren nach Anspruch 6, **dadurch gekennzeichnet, dass** mindestens die biozide Zusammensetzung mit einem pulverförmigen Füllstoff gemischt wird, eine Farbe unter Verwendung des so erhaltenen Gemisches als Pigment zubereitet wird, und die Farbe auf die Oberflächen in Kontakt mit dem Wasser aufgebracht wird.

9. Nicht therapeutische Verwendung einer bioziden Zusammensetzung nach einem der Ansprüche 1 bis 4, zum Verhindern der Entwicklung im Wasser oder auf einer Oberfläche in Kontakt mit dem Wasser von: einem biologischen Schleier, Mikro- und/ oder Makroorganismen.

## Claims

1. Biocidal composition including at least one active biocidal compound and at least one non-ionic or anionic exopolysaccharide (EPS),
the active biocidal compound being selected from at least one triamine having the formula II below, 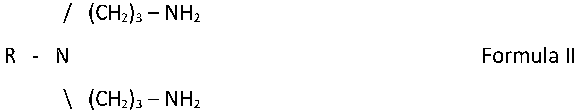 wherein R is a linear or branched alkyl chain in C₁-C₁₈,
**characterised in that** the biocidal composition comprises, by weight, relative to the total weight of said biocidal composition: 0.5 to 25% of the biocidal compound and 0.1 to 10% of exopolysaccharide.

2. Biocidal composition according to claim 1, wherein the biocidal compound of formula II is selected from among: N,N-Bis(3-aminopropyl)octylamine and N,N-Bis(3-aminopropyl)dodecyl amine, or one of their mixtures.

3. Biocidal composition according to claim 3, wherein the biocidal formula of formula II is N,N-Bis(3-aminopropyl)dodecyl amine.

4. Biocidal composition according to one of the preceding claims, wherein the biocidal compound of formula II represents by weight of 9% to 25% relative to the total weight of the biocidal composition and exopolysaccharide represents by weight of 0.5% to 8% and even more preferably, 0.5% to 5% relative to the total weight of the biocidal composition.

5. Non-therapeutic method for treating water and surfaces in contact with said water in view of preventing the development and/or of removing micro- and macro-organisms in water or on said surfaces in contact with water, **characterised in that** the biocidal composition is injected into water and/or is applied on said surfaces, according to one of claims 1 to 4.

6. Method according to claim 5, **characterised by** the fact that the biocidal composition is injected into water intermittently.

7. Method according to claim 6, **characterised by** the fact that the biocidal composition is injected into water, continuously.

8. Method according to claim 6, **characterised by** the fact that at least the biocidal composition is mixed with a powdered filler, a paint is prepared by using the mixture thus obtained as a pigment and said paint is applied on the surfaces in contact with water.

9. Non-therapeutic use of a biocidal composition according to one of claims 1 to 4, in order to prevent the development in water or on a surface in contact with water: a biological cover, micro- and macro-organisms.
